# EUROPÄISCHE PATENTANMELDUNG

(11) **EP 2 138 730 A2**
(43) Veröffentlichungstag der Anmeldung: **30.12.2009**
(21) Anmeldenummer: 09100339.2
(22) Anmeldetag: 16.06.2009
(51) Int. Cl.: F16C 23/04

(54) **Lagerbuchse sowie Lager**

(30) Priorität: 14.08.2008 DE 102008041273; 25.06.2008 DE 102008002644
(71) Anmelder: ROBERT BOSCH GMBH, 70442 Stuttgart (DE)
(72) Erfinder: Surkamp, Gundolf, 08720 Vilafranca Del Penedes (Barcel 08720) (ES); Boos, Tino, 76532 Baden-Baden (DE); Kraus, Achim, 77815 Buehl (DE)

(57) **Zusammenfassung**

Die Erfindung betrifft eine Lagerbuchse (1) zum drehbaren Lagern einer Welle (8), vorzugsweise für ein Wischerwellenlager, mit einem eine Lauffläche (3) für die Welle (8) aufweisenden Laufflächenabschnitt (4). Erfindungsgemäß ist vorgesehen, dass der Laufflächenabschnitt (4) einen sich in axialer Richtung verändernden Innendurchmesser aufweist.

## Beschreibung

### Stand der Technik

Die Erfindung betrifft eine Lagerbuchse zum drehbaren Lagern einer Welle, insbesondere einer Wischerwelle, gemäß dem Oberbegriff des Anspruchs 1, sowie ein Lager, insbesondere ein Wischerwellenlager, gemäß Anspruch 9.

Scheibenwischerantriebe nach dem heutigen Stand der Technik sind mit einem zwei Lagerbuchsen aufweisenden Wischerlager ausgestattet. Aufgabe der Lagerbuchsen ist es, die Wischerwelle während ihrer Pendelbewegung zu führen. In der Praxis zum Einsatz kommende Lagerbuchsen sind dabei als Sinterteile aus Sinterwerkstoffen ausgeführt, welche mit Schmierstoffen getränkt sind. Probleme bereiten dabei meist Fluchtungsfehler (Koaxialfehler) zwischen zwei in axialer Richtung benachbarten Lagerbuchsen. Zum Ausgleichen der Fluchtungsfehler ist es üblich, die Lagerbuchsen nach deren Montage mittels eines Kalibrierdorns zu kalibrieren.

Um bei bekannten Kunststofflagerbuchsen mit einer zylindrischen Innenkontur bei maximalen Fluchtungsfehlern zweier Lagerbuchsen die Wischerwelle noch fügen zu können, ist es notwendig, ein großes Radialspiel zwischen der Lauffläche und der Wischerwelle, also einen großen Innendurchmesser der Lagerbuchse zu realisieren, was sich negativ auf die Wellenführung auswirkt.

### Offenbarung der Erfindung

### Technische Aufgabe

Der Erfindung liegt die Aufgabe zugrunde, eine verbesserte Lagerbuchse vorzuschlagen, durch die Fluchtungsfehler zumindest weitgehend vermieden werden können. Bevorzugt soll bei der Lagerbuchse auf einen Kalibrierschritt bei der Montage verzichtet werden können. Ferner besteht die Aufgabe darin, ein Lager mit einer entsprechend verbesserten Lagerbuchse vorzuschlagen.

### Technische Lösung

Diese Aufgabe wird hinsichtlich der Lagerbuchse mit den Merkmalen des Anspruchs 1 und hinsichtlich des Lagers mit den Merkmalen des Anspruchs 9 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Die in der vorliegenden Anmeldung offenbarten Abmessungen, sowie sich aus den Abmessungen ergebende Verhältniswerte, sollen als bevorzugte Ausführungsform(en) offenbart gelten und beanspruchbar sein.

Der Erfindung liegt der Gedanke zugrunde, einen Ausgleich eines Fluchtungsfehlers (Koaxialfehlers) zwischen zwei Lagerbuchsen dadurch, zumindest teilweise, auszugleichen, dass der zu lagernden Welle eine (minimale) Schiefstellung relativ zur Lagerbuchsenlängsmittelachse ermöglicht wird. Dies wird bei einer nach dem Konzept der Erfindung ausgebildeten Lagerbuchse dadurch erreicht, dass die Lauffläche nicht wie im Stand der Technik als Innenzylinderfläche mit in axialer Richtung betrachtet konstantem (Innen-)Durchmesser ausgebildet wird, sondern stattdessen mit einem sich in axialer Richtung, vorzugsweise stetig, verändernden (Innen-)Durchmesser. Anders ausgedrückt ändert sich der Innendurchmesser einer mit ihrem Innenumfang eine Lauffläche für die Welle bildenden Durchgangsöffnung der Lagerbuchse in einem Laufflächenabschnitt. Hierdurch wird erreicht, dass die Welle zum Ausgleich eines Fluchtungsfehlers zwischen zwei axial benachbarten Lagerbuchsen (leicht) verkippt angeordnet werden kann, sodass die Kreisbahn entlang der sich die Welle an der Lauffläche abrollen kann, in einer Ebene liegt, die nicht exakt senkrecht zur Wellenlängsachse verlaufen muss, sondern einen von 90° abweichenden Winkel zur Wellenlängsachse einnehmen kann. Durch die Realisierung einer Lagerbuchse mit sich im Laufflächenabschnitt über die Axialerstreckung änderndem Innendurchmesser kann der minimale Innendurchmesser kleiner gewählt werden, als der Innendurchmesser bei einer zylindrischen Lagerbuchse aus dem Stand der Technik, wodurch ein geringeres Radialspiel zwischen Lauffläche und Welle und damit eine bessere Führung der geführten Welle resultiert.

Eine bevorzugte Ausführungsform sieht eine im Längsschnitt ballige Ausformung der Lauffläche vor. Anders ausgedrückt weist der Laufflächenabschnitt in axialer Richtung betrachtet einen gekrümmten Verlauf auf. Dabei ist eine Ausführungsform realisierbar, bei der der minimale Innendurchmesser des Laufflächenabschnitts an einem axialen Ende des Laufflächenabschnittes erreicht wird, oder alternativ in einem von dem axialen Ende beabstandeten Bereich.

Insbesondere für Lagerbuchsen, die zum Lagern einer Wischerwelle in einem Wischerwellenlager ausgebildet sind, hat es sich als vorteilhaft herausgestellt, wenn der Krümmungsradius der balligen Lauffläche aus einem Wertebereich zwischen etwa 180mm und etwa 300mm gewählt ist. Besonders bevorzugt wird der Krümmungsradius aus einem Wertebereich zwischen etwa 220mm und etwa 260mm gewählt. Ganz besonders bevorzugt beträgt der Krümmungsradius etwa 240mm. Es wird also bereits mit einer minimalen Balligkeit ein großer positiver Effekt im Hinblick auf den Ausgleich von Fluchtungsfehlern erzielt.

Ganz besonders bevorzugt ist eine Ausführungsform, bei der die Lauffläche spiegelsymmetrisch zu einer die Längsmittelachse des Laufflächenabschnittes senkrecht schneidenden (gedachten) Spiegelebene ausgebildet ist, sodass die Lauffläche von beiden Seiten gleichmäßig hin zu einem minimalen Innendurchmesser (Mindestinnendurchmesser) (gekrümmt) nach radial innen ansteigt.

Zusätzlich oder bevorzugt alternativ zu einer abschnittsweise balligen Ausformung der Lauffläche ist es bevorzugt, die Lauffläche zumindest abschnittsweise, vorzugsweise vollständig, konisch auszuformen, also derart, dass der Innendurchmesser des Laufflächenabschnittes hin zu einem minimalen Innendurchmesser konstant abnimmt, wobei dieser minimale Durchmesser vorzugsweise an einem axialen Ende der Lauffläche lokalisiert ist. Die konische Laufflächenform ist fertigungstechnisch vergleichsweise einfach realisierbar.

Besonders bevorzugt ist eine Ausführungsform der Lagerbuchse, bei der diese aus Kunststoff ausgebildet ist. Lagerbuchsen aus Kunststoff zeichnen sich im Vergleich zu Lagerbuchsen aus Sinterwerkstoffen durch eine kostengünstige Herstellbarkeit aus.

In Weiterbildung der Erfindung ist mit Vorteil vorgesehen, dass die Lagerbuchse einen endseitigen, vorzugsweise als Anschlagflansch dienenden, Umfangsbund aufweist, um eine definierte Einbautiefe der Lagerbuchse in eine Aufnahmeöffnung, insbesondere in einem Wischerwellenlager, zu gewährleisten.

Bevorzugt ist die Axialerstreckung der Wischerwelle aus einem Wertebereich zwischen etwa 9mm und 15mm gewählt. Ganz besonders bevorzugt beträgt die Axialerstreckung der Lagerbuchse etwa 12mm. Weiterhin ist es bevorzugt, wenn der Mindestinnendurchmesser, also der kleinste Innendurchmesser des Laufflächenabschnittes, aus einen Wertebereich zwischen etwa 9mm und etwa 15mm gewählt ist. Bevorzugt beträgt dieser Mindestinnendurchmesser etwa 12mm. Ganz besonders bevorzugt ist es, wenn der Mindestinnendurchmesser, zumindest näherungsweise, der Axialerstreckung der Lagerbuchse entspricht.

Die Erfindung führt auch auf ein Lager, vorzugsweise ein Wischerwellenlager, mit einer Welle, die von mindestens einer zuvor beschriebenen Lagerbuchse drehbar, insbesondere pendelbar, gelagert ist. Besonders bevorzugt weist das, insbesondere als Wischerwellenlager ausgebildete, Lager dabei zwei in axialer Richtung beabstandete Lagerbuchsen auf. Fluchtungsfehler zwischen diesen Lagerbuchsen werden, zumindest zum Teil, dadurch ausgeglichen, dass die Wischerwelle (leicht) aufgrund der erfindungsgemäßen Ausformung der Lauffläche schräg zu den Längsmittelachsen der Lagerbuchsen angeordnet werden kann.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: ein erstes Ausführungsbeispiel einer Lagerbuchse mit einer symmetrischen, ballig ausgeformten Lauffläche,
- Fig. 2: ein Lager mit zwei jeweils eine ballige Lauffläche aufweisenden Lagerbuchsen,
- Fig. 3: ein zweites Ausführungsbeispiel einer Lagerbuchse mit einer konischen Lauffläche, und
- Fig. 4: ein Lager mit zwei jeweils eine konische Lauffläche aufweisenden Lagerbuchsen.

### Ausführungsformen der Erfindung

In den Figuren sind gleiche Elemente und Elemente mit der gleichen Funktion mit den gleichen Bezugszeichen gekennzeichnet.

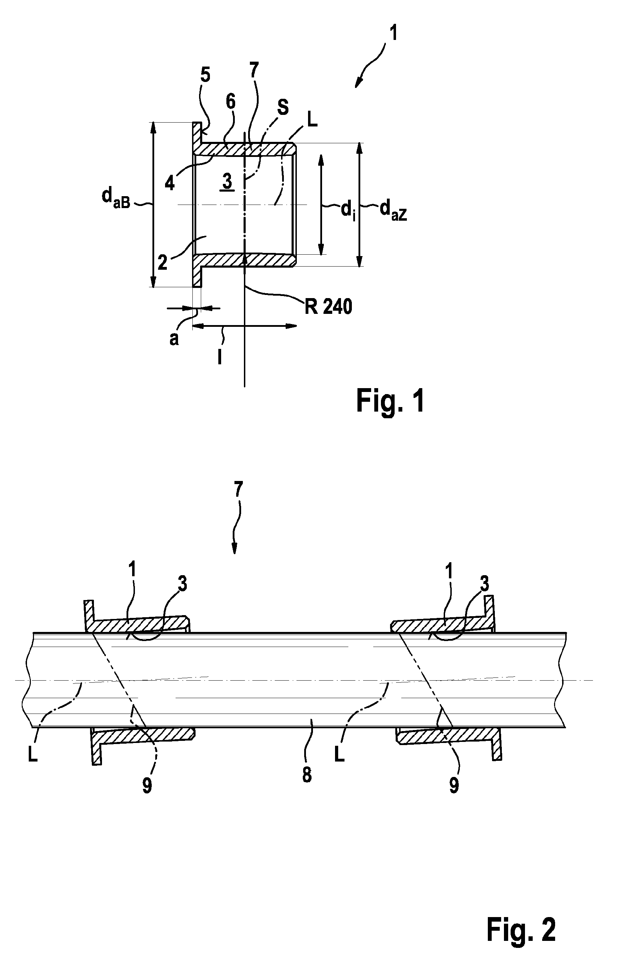

In Fig. 1 ist eine Lagerbuchse 1 für ein Wischerwellenlager gezeigt. Die Lagerbuchse 1 weist eine Durchgangsöffnung 2 auf, deren Innenumfang eine rotationssymmetrische Lauffläche 3, eines sich nahezu über die gesamte Längserstreckung der Lagerbuchse 1 erstreckenden Laufflächenabschnittes 4 bildet. Die Lauffläche 3 dient zur Anlage bzw. zur Führung der aus Übersichtlichkeitsgründen nicht gezeigten, mittels der Lagerbuchse 1 zu lagernden zylindrischen Welle. Die Lauffläche 3 weist keine Zylinderform auf, sondern ist leicht ballig ausgeführt mit einem Krümmungsradius R von 240mm. Ein Mindestinnendurchmesser dᵢ des Laufflächenabschnittes 4 bzw. der Durchgangsöffnung 2 beträgt in dem gezeigten Ausführungsbeispiel 12mm, ebenso wie die Axialerstreckung 1 (Länge) der gesamten Lagerbuchse 1. Der Mindestinnendurchmesser dᵢ befindet sich in dem gezeigten Ausführungsbeispiel in einer Spiegelebene S, die eine Längsmittelachse L der Durchgangsöffnung 2 senkrecht schneidet. Die Lauffläche 3 ist spiegelsymmetrisch zu dieser Spiegelebene S ausgeformt.

Wie sich weiter aus Fig. 1 ergibt, beträgt der Außendurchmesser d_{aB} eines endseitigen Umfangsbundes 5 20mm und ist damit größer als der Außendurchmesser d_{aZ} eines axial an den Umfangsbund 5 angrenzenden Zylinderabschnittes 6, der in dem gezeigten Ausführungsbeispiel 15mm beträgt. Es ergibt sich somit eine Wandstärke des Zylinderabschnittes 6 von etwa 2,5mm. Die axiale Dicke a des Umfangsbundes 5 beträgt in dem gezeigten Ausführungsbeispiel 1 mm.

In Fig. 2 ist ein Lager 7 für eine rotierbare Welle 8 gezeigt. Zu erkennen ist, dass die Welle 8 mit zwei in axialer Richtung beabstandeten, lediglich stark schematisiert angedeuteten, Lagerbuchsen 1 gelagert ist, wobei jede Lagerbuchse 1 eine in axialer Richtung betrachtet ballig ausgeformte Lauffläche 3 aufweist. Zu erkennen ist ferner, dass die Längsmittelachsen L der Lagerbuchsen 1 in axialer Richtung nicht exakt fluchten. Zum Ausgleich dieses Fluchtungsfehlers (Koaxialfehlers) ist die Welle 8 leicht schräg zu den Längsmittelachsen L angeordnet und stützt sich an jeder Lauffläche 3 an einer angedeuteten, Kreisringfläche 9 ab, die in jeweils einer die jeweilige Längsmittelachse L nicht exakt rechtwinklig schneidenden Ebene liegt.

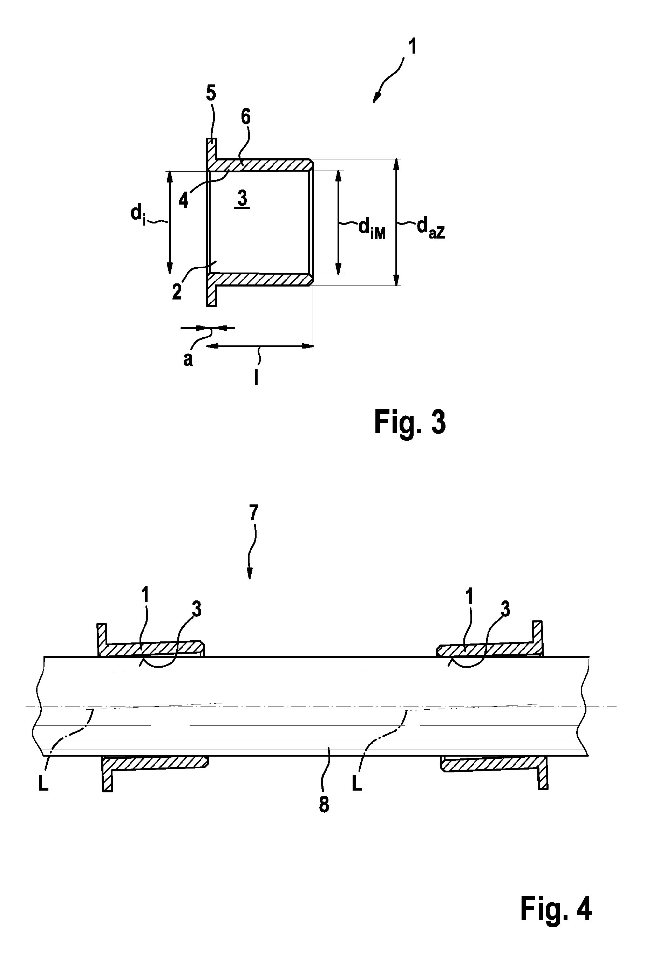

In Fig. 3 ist ein alternatives Ausführungsbeispiel einer Lagerbuchse 1 zum Lagern einer nicht gezeigten Welle dargestellt. Die Lagerbuchse 1 umfasst, wie die Lagerbuchse 1 gemäß Fig. 1, einen sich nahezu über die gesamte Axialerstreckung der Lagerbuchse 1 erstreckenden Laufflächenabschnitt 4 mit einer Lauffläche 3. Letztere ist im Gegensatz zu Fig. 1 nicht ballig, sondern konisch ausgeformt. Der Innendurchmesser der Durchgangsöffnung 2 nimmt dabei von in der Zeichnungsebene links, ausgehend von einem Mindestinnendurchmesser dᵢ von in dem gezeigten Ausführungsbeispiel 12mm bis auf einen Maximalinnendurchmesser d_{iM} zu. Wie sich weiterhin aus Fig. 3 ergibt, ist der Außendurchmesser des Umfangsbundes d_{aB} um 1mm kleiner als bei dem Ausführungsbeispiel gemäß Fig. 1 und beträgt 19mm. Der Außendurchmesser d_{aZ} des Zylinderabschnittes 6 beträgt, wie bei dem Ausführungsbeispiel gemäß Fig. 1, 15mm. Die axiale Dickenerstreckung a des Umfangsbundes 5 beträgt wie bei dem Ausführungsbeispiel gemäß Fig. 1 1mm.

In Fig. 4 ist ein Lager 7 mit zwei Lagerbuchsen 1 zum Lagern einer Welle 8 gezeigt. Zu erkennen ist, dass beide Lagerbuchsen 1 jeweils eine sich konisch erweiternde Lauffläche 3 aufweisen, wobei der Innendurchmesser der Laufflächen 3 in Richtung der jeweils anderen Lagerbuchse 1 zunimmt.

Wie sich aus Fig. 4 ergibt, ist die Welle 8 zum Ausgleich eines Fluchtungsfehlers schräg zu den Längsmittelachsen L der Lagerbuchsen 1 angeordnet.

## Patentansprüche

1. Lagerbuchse zum drehbaren Lagern einer Welle (8), vorzugsweise für ein Wischerwellenlager, mit einem eine Lauffläche (3) für die Welle (8) aufweisenden Laufflächenabschnitt (4),
**dadurch gekennzeichnet,**
**dass** der Laufflächenabschnitt (4) einen sich in axialer Richtung verändernden Innendurchmesser aufweist.

2. Lagerbuchse nach Anspruch 1,
**dadurch gekennzeichnet,**
**dass** die Lauffläche (3) im Längsschnitt, zumindest abschnittsweise, ballig ausgeformt ist.

3. Lagerbuchse nach Anspruch 2,
**dadurch gekennzeichnet,**
**dass** der Krümmungsradius (R) der balligen Lauffläche (3) aus einem Wertebereich zwischen etwa 180mm und etwa 300mm, vorzugsweise aus einem Wertebereich zwischen etwa 220mm und etwa 260mm gewählt ist und/oder etwa 240mm beträgt.

4. Lagerbuchse nach einem der Ansprüche 2 oder 3,
**dadurch gekennzeichnet,**
**dass** die Lauffläche (3) spiegelsymmetrisch zu einer die Längsmittelachse (L) des Laufflächenabschnittes (4) senkrecht schneidenden Spiegelebene (S) ausgebildet ist.

5. Lagerbuchse nach einem der vorhergehenden Ansprüche,
**dadurch gekennzeichnet,**
**dass** die Lauffläche (3), zumindest abschnittsweise, konisch ausgeformt ist.

6. Lagerbuchse nach einem der vorhergehenden Ansprüche,
**dadurch gekennzeichnet,**
**dass** die Lagerbuchse (1) aus Kunststoff ausgebildet ist.

7. Lagerbuchse nach einem der vorhergehenden Ansprüche,
**dadurch gekennzeichnet,**
**dass** die Lagerbuchse (1) einen endseitigen Umfangsbund (5) aufweist.

8. Lagerbuchse nach einem der vorhergehenden Ansprüche,
**dadurch gekennzeichnet,**
**dass** die Lagerbuchse (1) eine Axialerstreckung (l) und/oder einen Mindestinnendurchmesser (dᵢ) aus einem Wertebereich zwischen etwa 9mm und etwa 15mm, vorzugsweise von etwa 12mm, aufweist.

9. Lager, vorzugsweise Wischerwellenlager, mit mindestens einer, von mindestens einer Lagerbuchse (1) nach einem der vorhergehenden Ansprüche gelagerten, Welle (8).

10. Lager nach Anspruch 9,
**dadurch gekennzeichnet,**
**dass** die Welle (8) mit zwei in axialer Richtung beabstandeten Lagerbuchsen (1) gelagert ist.
